# EUROPEAN PATENT APPLICATION

(11) **EP 2 595 055 A1**
(43) Date of publication of application: **22.05.2013**
(21) Application number: 12007541.1
(22) Date of filing: 06.11.2012
(51) Int. Cl.: G06F 9/455

(54) **Network port profile representation in open virtualization format package**

(30) Priority: 18.11.2011 US 201161561668 P; 13.12.2011 US 201113324584
(71) Applicant: Broadcom Corporation, Irvine, CA 92617 (US)
(72) Inventor: Hemal, Shah, Trabuco Canyon, CA 92679 (US)
(74) Representative: Jehle, Volker Armin

(57) **Abstract**

A method for providing network port profiles in open virtualization format includes embedding content of the network port profiles in an open virtualization format file, referencing the network port profiles inside an open virtualization format package, or referencing the network port profiles outside of the OVF package.

## Description

### 1. Technical Field.

This disclosure relates to an open virtualization format, and more particularly to a network port profile representation in an open virtualization format package.

### 2. Background.

Virtual networking enables virtual computer systems, also known as virtual machines, to be networked together. Virtual computer systems can connect to each other and to the physical network using virtual Ethernet ports and virtual Ethernet switches. Open virtualization format (OVF) is a standard for packaging and distributing virtual appliances or software to be run in virtual machines.

### BRIEF SUMMARY OF THE INVENTION

According to an aspect, an open virtualization format package is provided, comprising:
an open virtualization format file to represent one or more virtual machines in a virtual networking environment; and
one or more network port profiles associated with the open virtualization format file, the network port profiles to describe networking attributes applied for the virtual machines.

Advantageously, the package further includes one or more network port profile documents to store the network port profiles.

Advantageously, the open virtualization format file references the network port profile documents to obtain the network port profiles.

Advantageously, the open virtualization format file contains the network port profile embedded in the open virtualization format file.

Advantageously, the open virtualization format file references the network port profiles stored in a network port profile database.

Advantageously, the network port profiles are referenced via a network protocol.

Advantageously, the network protocol comprises HTTP.

Advantageously, the networking attribute of the network port profile includes quality of service, MAC addresses, VLAN tagging, MAC address/VLAN pairs, traffic priority, flow control, bandwidth settings, packet filtering and access control lists.

According to an aspect, an open virtualization format package comprises:
an open virtualization format file to represent one or more virtual machines;
a manifest file for an integrity check;
a certificate file for an authenticity check;
virtual machine hard disk images;
additional resource files; and
one or more network port profiles associated with the open virtualization format file to describe one or more networking attributes applied to the virtual machines.

Advantageously, the package further includes network port profile documents to store the network port profiles, where the open virtualization format file references the network port profile documents to obtain the network port profiles. Advantageously, the open virtualization format file contains the network port profiles content embedded in the open virtualization format file.

Advantageously, the open virtualization format file references the network port profiles stored in a network port profile database.

Advantageously, the networking attribute of the network port profile includes quality of service, MAC addresses, VLAN tagging, MAC address/VLAN pairs, traffic priority, flow control, bandwidth settings, packet filtering and access control lists.

According to an aspect, a method is provided for running one or more virtual machines in an open virtualization format environment, comprising:
packaging an open virtualization format package containing the virtual machines;
distributing the open virtualization format package to a virtual machine administrator;
deploying by the virtual machine administrator the virtual machine to the open virtualization format environment; and
providing network port profiles associated with the virtual machines.

Advantageously, the method further comprises incorporating the network port profiles in the open virtualization format package.

Advantageously, the method further comprises providing an open virtualization format file in the open virtualization format package, where the network port profiles are embedded in the open virtualization format file.

Advantageously, the method further comprises providing an open virtualization format file and one or more network port profile documents in the open virtualization format package, where the open virtualization format file references the network port profile documents for the network port profiles.

Advantageously, the method further comprises incorporating the network port profiles in a database separate from the open virtualization format package.

Advantageously, the method further comprises providing an open virtualization format file in the open virtualization format package, where the network port profiles are referenced from the database by the open virtualization format file.

Advantageously, the network port profiles are associated with the virtual machines during the packaging, distributing or deploying.

### BRIEF DESCRIPTION OF THE DRAWINGS

The system may be better understood with reference to the following drawings and description. In the figures, like reference numerals can designate corresponding parts throughout the different views.

Figure 1 is a block diagram of an exemplary network for running virtual machines.

Figure 2 is a block diagram of an exemplary OVF package.

Figure 3 is a block diagram of an exemplary OVF package.

Figure 4 is a block diagram of an exemplary OVF package.

Figure 5 is a flowchart for a method of running a virtual machine in an open virtualization format environment.

### DETAILED DESCRIPTION

The discussion below makes reference to using network profiles, also known as network port profiles, with open virtualization format (OVF). The networking profiles can describe a set of network attributes such as network access control, quality of service (QoS) such as traffic priority and bandwidth guarantees, VLAN tagging, and packet filtering. Mechanisms can incorporate and represent network port profiles with an OVF package, such as by embedding the network port profile in an OVF file, or referring to the network port profiles through a reference local to or remote from the OVF package. In some instances, the complexity and/or cost of virtual networking components may be reduced by managing the virtual networking components.

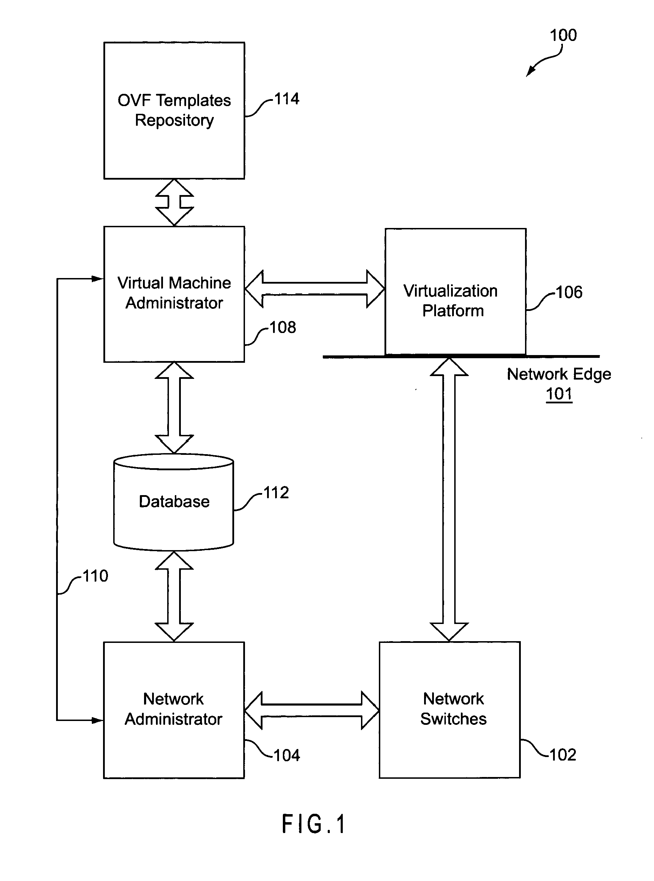

Figure 1 is a block diagram of an exemplary OVF environment 100 for running virtual machines. The OVF environment 100 can include a communications network 101, including network switches and controllers 102 administered by a network administrator 104. The network administrator 104 can include hardware, software and/or firmware to manage and monitor the network switches 102. The network switches 102 connect with a virtualization platform 106. The virtualization platform 106 can include virtual machines, including applications, guest operating systems and virtual network interface cards, a hypervisor including a virtual switch, and physical network interface cards.

The virtualization platform 106 can be configured to deploy the virtual machines by a virtual machine administrator 108, which can be implemented together or separately from the network administrator 104, and can be implemented with software, hardware and/or firmware. If the virtual machine administrator 108 and the network administrator 104 are implemented separately, they can communicate with each other via communication line 110. Both the virtual machine administrator 108 and network administrator 104 can connect with a database 112 to store the network port profiles. The virtual machine administrator 108 can connect with an OVF templates repository 114 for storing OVF templates for developing, packaging and distributing OVF packages. The OVF packages can include a representation of a virtual server that contains a configured, tested operating system and middleware and software applications, along with the metadata that describes the virtual server. The OVF package can include different formats such as a set of files called set-of-file format or a single TAR (tape archive) file containing the same set of files, typically with a .ova extension.

OVF can include a packaging format that provides an ease of portability, security and transportation to enable independent software vendors (ISVs) to develop virtual appliances and deploy them on a wide variety of platforms. The virtual appliances can include pre-configured software stacks of one or more virtual machines (VM's). An OVF package may contain a single virtual machine with corresponding meta-data to serve as a template to deploy virtual machines for different user groups, such as different groups within an organization. Additionally or alternatively, the OVF package may contain multiple virtual machines representing a more complex application. The OVF packages can contain metadata, information about what tasks to perform with the virtual machines, how to deploy the virtual machines and how to network the virtual machines together. Other information in the OVF package may include the storage format and the virtual machine image format, such as VMDK or VHD, for a specific vendor, e.g., VMware, Citrix and Microsoft Hyper-V. After the OVF packages are developed, packaged, distributed, they can be deployed by the virtual machine administrator 108 to the virtualization platform 106 and then sent to a server or any hardware platform of network switches 102.

The OVF packages provide a format which allows for packaging, distributing and deploying virtual machines with a variety of hardware and operating systems without having to determine a specific vendor of the underlying hardware and operating systems. The format can include a file with a number files contained therein that allow all the content in the files and metadata to be interpreted. At least some of the files can include network port profile content, e.g., information about the network and network components, which allow OVF to be deployed and consistently configured at both the virtualization platform 106 and the network switches 102.

The network port profile can refer to a set of networking attributes that can be applied to one or more virtual machines. The application of network port profile to a virtual machine can result in a specific configuration of the network infrastructure to which the virtual machine connects to. The network port profiles can be used to represent networking attributes such as: Quality of Service (QoS), Media Access Control (MAC) Addresses, Virtual Local Area Network (VLAN) tags, MAC address/VLAN pairs, Traffic Priority, Flow Control, Bandwidth settings, packet filtering and Access Control Lists (ACLs). For example, to describe two virtual machines, such as a web server and storage server, for each the VLAN tags and minimum bandwidth setting, e.g. 2 Gigabits per second, can be identified by the network port profiles.

The OVF package can contain a descriptor and additional content such as one or more virtual disks or images in other formats such as an International Organization for Standardization (ISO) image or other archive file also known as a disk image 260 for optical disks. The content can accompany the OVF descriptor file or can be external to it and referred to via hypertext transfer protocol (HTTP). The OVF descriptor can be described in eXtensible Markup Language (XML) document that can describe the meta-data about the software installed on the virtual disks. The OVF descriptor can contain commonly needed meta-data organized into sections such as virtual hardware, disks, networks, resource requirements and customization parameters.

To provide runtime customizability, the OVF package can also provide an OVF environment document specification. The environment document can allow a standard and extensible way for a virtualization platform to communicate deployment configuration to the guest software for runtime customization, if necessary. The OVF environment can be included in an XML document containing deployment time customization information for the guest software such as MAC addresses, BIOS UUIDs, IP addresses, etc.

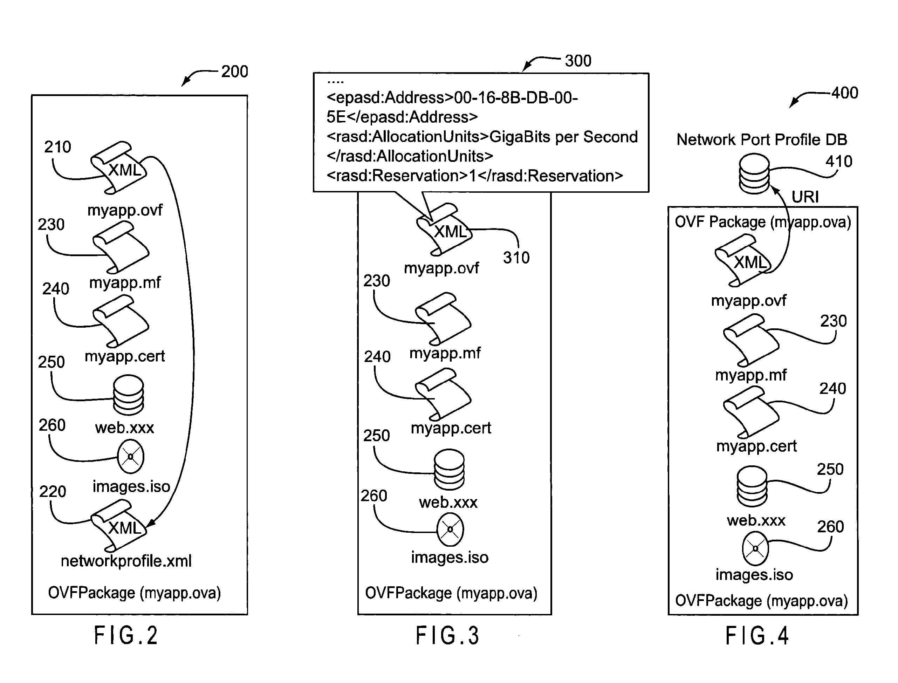

Figure 2 is a block diagram of an exemplary OVF package 200 incorporating network port profiles. The network port profiles can be incorporated in the OVF package 200 as separate XML documents of one or more network port profiles inside the package. The OVF descriptor file inside the package can contain references to the network port profiles that apply to one or more virtual computer systems, or virtual machines, represented in the OVF file. In this example, the OVF file myapp.ovf 210 can reference the networkportprofile.xml document 220 to obtain network port profile information. The network port profile content can be authored during the development or packaging phases by the virtual machine administrator 108 using sample OVF packages of the OVF package repository 114. The network port profiles can be incorporated in the OVF package 200 at various times, such as during the development or packaging phases of the OVF package 200.

Other files that can be included in the OVF package include a manifest file 230, a certificate file 240, the virtual machine hard disk content (web.xxx) 250, including data and other information used to run the web server, the ISO image or disk image 260, and additional resource files. The manifest file can be used for integrity checks and the certificate file can be used for authenticity checks. The manifest file can contain the digest of all files in the package (e.g., except for the .mf and .cert files themselves), and the certificate file can contain a signed digest for the manifest file and a certificate.

Figure 3 is a block diagram of an exemplary OVF package 300 incorporating network port profiles. The OVF package 300 can contain the network port profiles or elements of network port profiles embedded inside the OVF file 310 of the OVF package 300. Therefore, the network port profiles content can be incorporated into the open virtualization format file without requiring references to the network port profiles. The embedded network port profiles contents can apply to one or more virtual computer systems, or virtual machines, represented in the OVF file. The network port profile contents can be embedded in the description of one or more virtual machines inside the OVF file. The network port profile content can be incorporated and authored in the OVF package during the development of the OVF package. The embedding of network port profile contents can allow for the incorporation of virtual machine network configuration in the description of virtual machines without requiring separate XML documents. This may be useful for the virtual machine creation, migration, and snapshot services that do not have knowledge of network port profiles.

Figure 4 is a block diagram of an exemplary OVF package 400 incorporating network port profiles. In this example, the network port profile contents need not be incorporated in the OVF package 400. Instead, the OVF package 400 can contain the references to one or more network port profiles located outside of the OVF package 400. The OVF package 400 can utilize uniform resource identifiers (URIs), or other addressing to identify resources, to reference the network port profiles, such as in a network port profile database 410 located on a network. For example, a network protocol such as HTTP can be used to reference or access the network port profiles. The OVF package 400 describing the virtual machine can provide the URL such that when the virtual machine is deployed the networking attributes are applied by using the description in the network port profile XML document which is located at the URL. The referenced network port profiles can apply to one or more virtual computer systems, or virtual machines, represented in the OVF file. Prior to the deployment of the OVF package, the network port profiles can be authored anytime during the development, packaging and distribution phases of the OVF package.

Advantages to providing the network port profile in a document separate from the OVF file (e.g., like in Figures 2 and 4) include the ability to reference the network port profiles in the OVF file without incorporating or duplicating their contents. In addition, storing the network port profile remotely (e.g., Figure 4) allows the referencing of network port profiles in the OVF package without requiring the incorporation of their contents into the OVF package. This can enable the authoring of network port profiles independently from the development, packaging, and distribution phases of the OVF package.

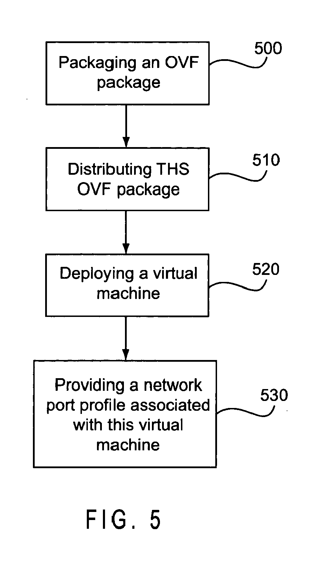

Figure 5 is a flowchart for a method of running a virtual machine in an open virtualization format environment. At 500, an open virtualization format package is packaged to include the virtual machine. For example, the virtual machine administrator 108 can connect with the OVF templates repository 114 to create the package. At 510, the open virtualization format package is distributed to the virtual machine administrator 108. At 520, the virtual machine administrator 108 can deploy the virtual machine to a virtualization platform 106 of the open virtualization format environment. At 530, a network port profile can be associated with the virtual machine.

Further to the above, the network port profile can be obtained from the database 112 or other memory and associated with the virtual machine in several ways. The network port profile can be associated with the virtual machine during the packaging, distributing and/or deploying of the virtual machine. In one example, the network port profile is incorporated within the open virtualization format package. The network port profile can be directly embedded in the open virtualization format file (e.g., Figure 3). Additionally or alternatively, the network port profile can be contained in a network port profile document of the open virtualization format package (e.g., Figure 2). The open virtualization format file, e.g. myapp.ovf, can then reference the network port profile document for the network port profile. In another example, the network port profile can be referenced from the database 112, or other memory, separate from the open virtualization format package (e.g., Figure 4). The network port profile can be referenced from the database 112 by the open virtualization format file, e.g. myapp.ovf.

The methods, devices, and logic described above may be implemented in many different ways in many different combinations of hardware, software or both hardware and software. For example, all or parts of the system may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. All or part of the logic described above may be implemented as instructions for execution by a processor, controller, or other processing device and may be stored in a tangible or non-transitory machine-readable or computer-readable medium such as flash memory, random access memory (RAM) or read only memory (ROM), erasable programmable read only memory (EPROM) or other machine-readable medium such as a compact disc read only memory (CDROM), or magnetic or optical disk. Thus, a product, such as a computer program product, may include a storage medium and computer readable instructions stored on the medium, which when executed in an endpoint, computer system, or other device, cause the device to perform operations according to any of the description above.

The processing capability of the system may be distributed among multiple system components, such as among multiple processors and memories, optionally including multiple distributed processing systems. Parameters, databases, and other data structures may be separately stored and managed, may be incorporated into a single memory or database, may be logically and physically organized in many different ways, and may implemented in many ways, including data structures such as linked lists, hash tables, or implicit storage mechanisms. Programs may be parts (e.g., subroutines) of a single program, separate programs, distributed across several memories and processors, or implemented in many different ways, such as in a library, such as a shared library (e.g., a dynamic link library (DLL)). The DLL, for example, may store code that performs any of the system processing described above.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. An open virtualization format package, comprising:
an open virtualization format file to represent one or more virtual machines in a virtual networking environment; and
one or more network port profiles associated with the open virtualization format file, the network port profiles to describe networking attributes applied for the virtual machines.

2. The package of claim 1 further including one or more network port profile documents to store the network port profiles.

3. The package of claim 2 where the open virtualization format file references the network port profile documents to obtain the network port profiles.

4. The package of claim 1 where the open virtualization format file contains the network port profile embedded in the open virtualization format file.

5. The package of claim 1 where open virtualization format file references the network port profiles stored in a network port profile database.

6. The package of claim 5 where the network port profiles are referenced via a network protocol.

7. The package of claim 6 where the network protocol comprises HTTP.

8. The package of claim 1 where the networking attribute of the network port profile includes quality of service, MAC addresses, VLAN tagging, MAC address/VLAN pairs, traffic priority, flow control, bandwidth settings, packet filtering and access control lists.

9. An open virtualization format package, comprising:
an open virtualization format file to represent one or more virtual machines;
a manifest file for an integrity check;
a certificate file for an authenticity check;
virtual machine hard disk images;
additional resource files; and
one or more network port profiles associated with the open virtualization format file to describe one or more networking attributes applied to the virtual machines.

10. A method for running one or more virtual machines in an open virtualization format environment, comprising:
packaging an open virtualization format package containing the virtual machines;
distributing the open virtualization format package to a virtual machine administrator;
deploying by the virtual machine administrator the virtual machine to the open virtualization format environment; and
providing network port profiles associated with the virtual machines.

11. The method of claim 10 further comprising incorporating the network port profiles in the open virtualization format package.

12. The method of claim 11 further comprising providing an open virtualization format file in the open virtualization format package, where the network port profiles are embedded in the open virtualization format file.

13. The method of claim 11 further comprising providing an open virtualization format file and one or more network port profile documents in the open virtualization format package, where the open virtualization format file references the network port profile documents for the network port profiles.

14. The method of claim 10 further comprising incorporating the network port profiles in a database separate from the open virtualization format package.

15. The method of claim 14 further comprising providing an open virtualization format file in the open virtualization format package, where the network port profiles are referenced from the database by the open virtualization format file.
